# EUROPEAN PATENT APPLICATION

(11) **EP 2 987 405 A1**
(43) Date of publication of application: **24.02.2016**
(21) Application number: 14785114.1
(22) Date of filing: 16.04.2014
(51) Int. Cl.: A01N 25/00, A01N 25/22, A01N 25/24, A01N 61/00, A01N 59/00, A01N 59/06, A01N 55/10

(54) **AGROCHEMICAL FORMULATION OF THE OIL DISPERSION TYPE, USE OF THE AGROCHEMICAL FORMULATIONS OF THE OIL DISPERSION TYPE, AND METHOD FOR PRODUCING AN AGROCHEMICAL FORMULATION OF THE OIL DISPERSION TYPE**

(30) Priority: 18.04.2013 BR 102013009504
(71) Applicant: Oxiteno S.A. Industria e Comercio, Sao Paulo - SP 01317-001 (BR)
(72) Inventor: CASTELANI, Priscila, CEP-09080-300 Santo André-SP (BR)
(74) Representative: Eisenführ Speiser
(86) International application number: PCT/BR2014/000125
(87) International publication number: WO 2014/169363

(57) **Abstract**

The present invention relates to novel agrochemical oil dispersion formulations comprising at least one active ingredient suspended in oil phase, dispersants, a clay-based rheological additive, a cellulose derived rheological additive and emulsifying agents, wherein they can further comprise at least one active ingredient solubilized in the oil phase. These agrochemical oil dispersion formulations can be used in spray mixtures for controlling pests in agriculture. The novel agrochemical oil dispersion formulations described herein are obtained by a process comprising a step of dispersing at least one active ingredient in the oil phase with dispersants and a clay-based rheological additive, followed by a step of milling the dispersed mixture and a final mixing step where cellulose- and clay-based rheological additives are added in addition to emulsifying agents, wherein at least one active ingredient can also be added by solubilization.

## Description

### Field of the invention

The present invention relates to novel agrochemical oil dispersion formulations comprising at least one active ingredient suspended in an oil phase. The present invention further discloses its final use in agriculture and the process for the preparation of these agrochemical oil dispersion formulations.

### Background art

The most effective way to control crop pests is the application of pesticides in accordance with the appropriate management practices. According to the present invention, pesticides comprise any and all active ingredient (AI), which is applied on crops for the purpose of controlling or mitigating pests. Pesticides can be classified according to the pests they control, and among the most common pesticides found in the market are herbicides, insecticides, fungicides and acaricides.

Pesticides are usually found on the market both in the pure form and incorporated into agrochemical formulations, which typically comprise one or more AIs and additional inert substances that enhance the effects and facilitate the application thereof, such as carriers, adjuvants or additives. These formulations can be directly applied onto the crops or, more commonly, are applied after being diluted and the spray mixture formed. The formulation type to be used is primarily defined on the basis of physicochemical characteristics of the AI(s) and can be: soluble concentrate (SL), emulsifiable concentrate (EC), emulsion in water (EW), suspension concentrate (SC), suspo-emulsion (SE), micro-emulsion (ME), oil dispersion or suspension concentrate (OD), dispersible concentrate (DC), capsule suspension (CS), dispersible granules (WG), wettable powder (WP), among others (Norma ABNT NBR 12679:2004 - Agrotóxicos e afins, Produtos técnicos e fomulações, Terminologia).

The various types of agrochemical formulations are the result of the existence of a large variety of AIs of different chemical natures. For example, a water soluble AI can be easily included into a water based SL while a high melting, water insoluble AI is commonly found in the form of a SC. For this reason, agrochemical formulations are distinct and can contain different inert components.

Recently, OD formulations have been the subject of studies by companies and formulators because of their advantages with respect to the agronomic performance in the field as compared with conventional SCs. The main difference between an OD and a SC formulation is that in the former the AI is suspended in oil, while in the latter it is suspended in water. Formulated AIs usually exhibit physicochemical characteristics that would allow them to be formulated as ODs as well. The different performance between them is due to the fact that ODs already contain in their composition oil, such as a mineral or vegetable oil, and emulsifiers, which can act as penetration adjuvants when applied in the field. Penetration adjuvants aid in the absorption of AIs by the plant and, in the case of some SC formulations, they are used in association with the formulation in the spray mixture, ensuring agronomical effectiveness of the AI. Thus, OD formulations can be deemed "adjuvanted" formulations and do not require additional associated adjuvants to be applied in the field.

However, a technical challenge in the preparation of OD formulations is their preparation process per se, since the AI suspension in oil phase requires dispersing agents to stabilize the system. In the suspension process, AI particles must have their size reduced typically to between 1 and 5 µm, for the actives to have maximized activity on absorption by leaves or other targets and such that they are uniformly applied when the mixture is sprayed in the field. The most common process for reducing the particle size in a formulation is wet milling. Milling of liquid formulations is carried out in appropriate mills, both industrially and in laboratory scale. Dispersants are adsorbed onto the particle surface during milling, preventing them from sticking together and flocculating. An indication that dispersants are not acting as expected is the large increase in viscosity of the formulation during milling, which indicates that flocculation occurred, making this step of the process not viable. This is a very common and difficult to overcome phenomenon in an OD formulation, as conventional dispersants for water-based media do not exhibit the same performance in oil phase. Thus, the selection of dispersants for OD formulations in the process for the preparation of such formulation is challenging. For example, patent BR9801492-7 (Stable pesticide dispersion in agricultural oil and process for forming the same) and international patent application publication WO2012069514 *(Waterless composition comprising pesticide and copolymers with sulfonic acid groups)* disclose polymers that can be used as dispersants in OD formulations. Nevertheless, these molecules are quite complex. Other solutions use polyvalent cation salts to obtain the intended dispersion, as described in international patent application publication WO2007042138 *(Diflufenican-containing oil suspension concentrates)*, but the use of salts in oil formulations can lead to stability issues.

In addition to the preparation thereof, another technical difficulty found in OD formulations is their shelf stability which, in accordance with market practices, should be of 2 years. In such an instance, the main problems are separation of the oil phase on the top portion of the pack and sedimentation of AIs, which phenomena reduce the shelf life of these products.

Sedimentation problems in agrochemical formulations can generally be minimized by using additives or rheological modifiers. These additives increase the viscosity of the agrochemical formulation, conferring greater stability and allowing storage thereof for a longer period. Since they increase the viscosity of formulations, rheological additives are typically added at the end of the formulation process. These additives are usually designated intumescents, anti-sedimentation agents, suspending agents or thickeners. Rheological additives for SC formulations are widely known in the market, with xanthan gum being the most widely used, but for ODs rheological additives still represent a technical challenge. Recent patent documents disclose new rheological additives for this purpose. For example, international publication WO2012080208 *(Agrochemical Oil Dispersion*) discloses the preparation of a thickener for OD formulations by reacting a polyhydroxystearic acid with a tri- or tetramine. International patent application WO2012167321 *(Composition and method for enhancing the physical stability of agricultural oil-based suspension formulations)* discloses the use of rubber type copolymers to this end. In addition to these inventions, dibenzylidene sorbitol and derivatives thereof have also been described as thickeners for OD formulations in US patent application US20120208700 *(Stable agrochemical oil dispersions)*.

Clays such as bentonites, attapulgites and silicas of high surface area and cellulose derivatives are known to act as thickeners in aqueous agrochemical formulations. However, the use thereof in non-aqueous agrochemical formulations is little exploited. In US patent applications US20110086760 (*Suspension concentrates in oil of sulfonylureas and combinations with fluroxypyr or other agrochemicals)* and US20100331187 *(Formulations)* there are disclosed, respectively, the use of organo-modified bentonites and chemically activated bentonites to exhibit compatibility with oil systems, since conventional bentonites are not compatible with organic media. US patent application US20100190648 *(Structured agrochemical oil based systems)* mentions the use of attapulgites in combination with castor oil and derivatives thereof to thicken OD formulations, but a drawback is the low stability generated by said system upon association with anionic surfactants. The addition of anionic surfactants to this type of formulation is essential to dilute the same in spraying mixtures for application in the field.

In addition, solubilization of other AIs in the oil phase of the OD formulation has not been reported in any of the prior inventions. Said solubilization could lead to the incorporation of AIs that are soluble in said phase and which would be usually formulated as ECs or EWs. Thus, it would be possible to associate AIs having different physicochemical properties in a single formulation, which is only possible in quite complex formulations such as SEs.

It has now been surprisingly found that the use of anionic dispersants and ethanolamine fatty amide-based dispersants in association with the rheological additive attapulgite in the milling process prevents flocculation of AIs in oil phase, making it possible for one to obtain this type of formulation having particles of from 1 to 5 µm. It has also been noted that after the milling process, at the final step of the formulating process, attapulgite has to be added again in association with cellulose-derived rheological additives to provide the formulation with high storage stability. The association between these dispersants and rheological additives was shown to be essential for the preparation of the formulation and stability thereof, there existing a synergistic effect between these components for the preparation of agrochemical formulations containing at least one stable AI suspended in oil phase, even in the presence of anionic surfactants. At least one further AI could be solubilized in these formulations without any loss in stability.

Thus, it is an object of the present invention to provide novel agrochemical oil dispersion formulations comprising at least one active ingredient suspended in oil phase, dispersants, a clay-based rheological additive, a cellulose derived rheological additive and emulsifying agents, optionally comprising at least one active ingredient solubilized in the oil phase. It is a further object of the present invention the use of these agrochemical oil dispersion formulations in spray mixtures for controlling pests.

Another object of the present invention is the process for the preparation of said agrochemical oil dispersion formulations, wherein in the first step at least one active ingredient is dispersed in the oil phase with dispersants and a clay-based rheological additive, followed by a step of milling the dispersed mixture and a final mixing step where cellulose- and clay-based rheological additives are added in addition to emulsifying agents, and at least one active ingredient can also be added by solubilization. The advantages of the agrochemical oil dispersion formulation, the use thereof in agriculture and the process for the preparation of the agrochemical oil dispersion formulation of the present invention will be evident in the following description.

### Summary of the invention

The present invention relates to novel agrochemical oil dispersion formulations comprising at least one active ingredient suspended in oil phase, dispersants, a clay-based rheological additive, a cellulose derived rheological additive and emulsifying agents, wherein they can further comprise at least one active ingredient solubilized in the oil phase. These agrochemical oil dispersion formulations can be used in spray mixtures for controlling pests in agriculture. The novel agrochemical oil dispersion formulations described herein are obtained by a process comprising a step of dispersing at least one active ingredient in the oil phase with dispersants and a clay-based rheological additive, followed by a step of milling the dispersed mixture and a final mixing step where cellulose- and clay-based rheological additives are added in addition to emulsifying agents, wherein at least one active ingredient can also be added by solubilization.

### Detailed description of the invention

The novel agrochemical oil dispersion formulations referred to herein comprise at least one active ingredient suspended in oil phase, dispersants, a clay-based rheological additive, a cellulose derived rheological additive and emulsifying agents, and can further comprise at least one active ingredient solubilized in the oil phase.

The AIs suspended or solubilized in oil phase which are suitable for use in the present invention include herbicides, fungicides, insecticides and acaricides. Based on the commonly used nomenclature *(*The Pesticide Manual, Tomlin, C. D. S. (Ed.), 2006, 14th edition, British Crop Production Council), examples of compatible pesticides that can be used in the present invention include the following classes of herbicides: 4-(aryloxyphenoxy)alcanoic acid 2-(4-aryloxyphenoxy)alcanoic acid, 1,3,5-triazine, 1,3,5-triazine-2,4-dione, 2-(aryloxyphenoxy)propionamide, 2,6-dinitroaniline, 2-chloroacetanilide, acetamide, anilide, aromatic acid, arilaminopropionic acid, aryloxy carboxylic acid, aryloxyphenoxy propionate, benzamide, benzene dicarboxylic acid, benzimidazole, benzofuran, benzoic acid, benzonitrile, benzothiadiazinone, biphidilium, carbamate, chloroacetamide, cyclohexanodione oxime, dinitroaniline, dinitrophenol, diphenyl ether, glycine derivative, halogenated alcanoic acid, hydroxybenzonitrile, imidazolinone, isaoxazole, isoxazolidinone, N-phenylftalimide, organoarsenics, organochlorides, organophosphorus compounds, oxadiazole, oxiacetamide, phenoxy carboxylic acid, phenyl carbamate, phenylpyrazole, phenyl pyridazine, phenylurea, phosphinic acid, phosphoramidate, phosphoroditioate, phtalamate, pyrazole, pyridazine, pyridazinone, pyridin, pyridinecarboxamide, pyridinecarboxylic acid, pyrimidindione, pyrimidine, pyrimidinyloxybenzoic acid, quinolinecarboxylic acid, thiocarbamate, semicarbazone, sulfonylurea, thiadiazol, thiocarbamate, triazine, triazinone, triazole, triazolinone, triazolocarboxamide, triazolopyrimidine, triketone, uracil, urea and sulfanilylcarbamate. Examples of fungicide classes include: QiI, strobilurin-type, strobilurin analogue, triazole, fenylamide, benzimidazole, vanylamide carbamate, aromatic hydrocarbon, pyridine carboxyamide, aminopyridinole, phthalimide, oxatin carboxyamide, cyclopropane carboxyamide, chlorophenylnitroaniline, chloro nitrile, phenylacetamide, cyanoacetamide oxime, anilinopyrimidine, alkylenebis(dithiocarbamate), sulfamide, carboxyamide, pyridazinone, N-phenyl carbamate, pyrimidinamine, cinnamic acid amide, quinone, morpholine, guanidine, phosphorothiolate, thiazol carboxyamide, pyrimidine, furancarboxyamide, hydroxy anilide, propionamide, piperidine, organotin, dimethyldithiocarbamate, 2,6-dinitroaniline, phenylpyrrol, benzamide, pyridinyl ethylbenzamide, benzenesulphonamide, phenyl benzamide, phosphonate, pyrazole carboxyamide, guanidine, imidazole, dicarboxyamide, mandelamide, benzophenone, butyrolactone, phenylurea, isobenzofuranone, piperidine, polyoxin, carbamate, quinazolinone, pyrroloquinolinone, quinoline, tiophenecarboxyamide, spiroketalamine, thiadiazolcarboxyamide, benzotriazine, triazolobenzothiazole, piperazine, glucopyranosyl, 3'-4'-dichloroanilide, organomercury, triazine, urea, enupiranuronic acid, anilide, aminopyrimidinole, organophosphate, diazosulphonato, organoarsenic, pyridin, triazylaniline, acylalaninate, dicarboxymide, carboxyanilide, isophthalonitrile, thiadiazolic ether, aryl phosphorothioate and triazolinethione.

The AIs of the agrochemical formulation of the present invention can further comprise different classes of insecticides, including organophosphate, neonicotinoids, oxime carbamate, pyrethroid, carbamate, nereistoxin analog, cyclodiene organochloride, benzoylurea, avermectin, phenylpyrazolo, juvenile hormone mimetics, diacylhydrazine, oxadiazine, selective food blocker, fumigant, dimethylcarbamate, phenoxy carboxylic acid precursor , organophosphorous compounds, carbamoyloxime, urea, bis(arylformamidine), tetranortriterpenoid, benzofuranyl methyl carbamate, oxime methyl carbamate, thiadiazinone, triazinamine, anthranilamide, benzoylureia, spinosines, keto-enol; in addition to several acaricides, such as for example, those belonging to the organotin, benzylate, termite growth inhibitors, METI, pyrethroid, organochloride, benzimidazole and organophosphate classes.

The oil phase referred to by the present invention are modified vegetable oils obtained by transesterifying vegetable oils with short-chain alcohols, such as methanol, ethanol, butanol and pentanol, or by esterifying fatty acid fractions derived from the saponification of vegetable oils with the same said alcohols. Among the most common examples are: soy methyl ester, rapeseed methyl ester, palm methyl ester, palm kernel methyl ester, coconut methyl ester and C₈₋₁₀ methyl ester.

The emulsifying agents comprised in the invention are intended to emulsify the oil phase and the AIs that may be solubilized into said phase when formulations are diluted in spray mixtures, thereby rendering said mixture homogeneous and proper for application in the field. Thus, addition of emulsifiers in the agrochemical formulations of the present invention is essential to its final use in pest control. Among the emulsifiers comprised in the present invention are anionic and non-ionic surfactants, such as the calcium alkyl benzene sulphonates, natural or synthetic ethoxylated fatty alcohols, natural or synthetic, ethoxylated and propoxylated fatty alcohols, ethoxylated and propoxylated short-chain alcohols, EO/PO copolymers, ethoxylated fatty acids, ethoxylated castor oil, ethoxylated sorbitan esters, ethoxylated esterified sorbitols, ethoxylated alkylphenols, ethoxylated tristyrylphenols and ethoxylated fatty amines.

Among the dispersants required for carrying out the present invention are anionic surfactants, the most common being: phosphated ethoxylated alkylphenols; phosphated ethoxylated and proproxylated alkylphenols; phosphated ethoxylated tristyrylphenols; phosphated ethoxylated natural or synthetic fatty alcohols, phosphated ethoxylated and proproxylated natural or synthetic fatty alcohols. In addition to nonionic surfactants, the dispersants of the invention further comprising ethanolamine fatty amides.

Also, the most suitable clay-based rheological additives for the carrying out of the invention are attapulgites while the cellulose-derived rheological additives are hydroxy alkylcelluloses.

The novel agrochemical oil dispersion formulations of the present invention were shown to be quite stable, not exhibiting sedimentation or clustering of particles when stored for a long period of time. In addition, one of the great advantages of the present invention is the easy dissolution of one or more AIs in the oil phase without any loss of stability of the formulation, allowing AIs having different physicochemical properties, which are commonly formulated in e.g. SC and EC formulations, to be combined in a single formulation. There are only a few formulations in the market that allow for the combination of AIs having different physicochemical properties, among which the most common is SE, whose preparation is labor intensive and time consuming. Such combination of different AIs in a single formulation that is easy to be prepared is interesting in terms of the agronomic point of view, since the combination of actives is often required for the correct chemical management of pests, providing the required agronomic efficiency and preventing the emergence of resistant species, and in terms of chemical compatibility, because, in practice, for one to combine actives for the application in the field, such mixture is commonly made in the spray tank, which leads to incompatibility issues between different types of formulations, with losses in both the application and in agronomic efficacy. In addition, there is an economic advantage for the end user of the formulation, as a single product can be used instead of two or more. Another advantage of these novel formulations is that they comprise commercially available raw materials, making their production in large scale viable.

The agrochemical oil dispersion formulations described herein can be used in spray mixtures for pest control. The novel agrochemical oil dispersion formulations disclosed herein further have excellent agronomic performance, as they comprise ingredients that are known to have adjuvant activity, such as for example, an oil phase based on modified vegetable oils, which increases the agronomic efficacy of the AIs of said formulations. These advantages lead to novel agrochemical oil dispersion formulations which are largely applicable for pest control in agricultural settings.

For the proper execution of the invention, the novel agrochemical oil dispersion formulations have to be prepared in laboratory or industrial scale by means of a process that generally comprises 3 steps:
1. Dispersing at least one active ingredient in the oil phase in the presence of dispersants and a clay-based rheological additive. Such dispersion has to be made in a high velocity disperser or similar equipment.
2. Milling the dispersed mixture of step 1 to reduce the suspended particles until they reach 1 to 5 µm in size. The wet milling process must be carried out in a mill suitable for liquids, with glass or zirconium balls.
3. Under stirring, adding to the spray mixture cellulose derivative- and clay-based rheological additives for stabilization of the formulation, and emulsifiers required to emulsify such phase of the final formulation, and at least one active ingredient can also be added by solubilization.

One of the observations of the formulation process of the present invention is the combination of dispersants and clay-based rheological additive in the dispersion and milling steps of the formulation process, which is required for flocculation or/and re-agglomeration of particles not to occur during these processes. When dispersants or clay-based rheological additives were used separately, re-agglomeration took place, which increased viscosity of the formulation in the milling step, preventing the termination of the formulation process. A synergistic effect between these components was observed, which is essential for the preparation of the agrochemical formulations described herein.

Another fact that was surprisingly found in the formulation process of the invention was the need for the addition of the clay-based rheological additive in association with the cellulose derived additive after the milling process, at the final step of the formulation process so as to provide the formulation with high storage stability. The use of only one of the two rheology additives was not sufficient to provide the desired stability. In this step, emulsifiers and other AIs can be further solubilized in the oil phase, the advantages of which have been previously described.

The process of obtaining the novel formulations of the present invention has the advantage of being easily carried out both on laboratory and industrial scales, as it requires the same equipment and unit operations as used to obtain SC formulations, which are very common in laboratories that formulate agrochemical formulations as well as in plants that manufacture these formulations.. In addition, this process was shown to be quite simple and easy to perform, making the preparation of the agrochemical formulations described herein possible.

The agrochemical oil dispersion formulations of the present invention comprise from 5 to 50% of at least one active ingredient suspended in oil phase, from 5 to 30% dispersants, from 1 to 20% of a clay-based rheological additive, from 0.1 to 5% of a cellulose derived rheological additive and from 3 to 25% of an emulsifier, and from 0 to 50% of at least one active ingredient solubilized in the oil phase can also be present.

In a preferred embodiment of the present invention, the agrochemical oil dispersion formulation comprises of from 20 to 30% of an insecticidal active ingredient of the neonicotinoid chemical class suspended in modified soy oil, from 8 to 15% of phosphated ethoxylated tristyrylphenol and diethanolamine cocoamide dispersants, from 5 to 10% attapulgite, from 0.3 to 1% hydroxy ethylcellulose and from 5 to 15% of calcium dodecyl benzene sulfonate, ethoxylated castor oil and EO/PO butanol emulsifiers, further comprising from 3 to 15% of an insecticidal active ingredient of the pyrethroid class solubilized in the oil phase.

In another preferred embodiment of the present invention, the agrochemical oil dispersion formulation comprises from 8 to 20% of a fungicidal active ingredient of the chemical class of strobilurins suspended in modified soy oil, from 10 to 20% of phosphated ethoxylated tristyrylphenol and diethanolamine cocoamide dispersants, from 5 to 10% of attapulgite, from 0.5 to 2% of hydroxy ethylcellulose and from 5 to 15% of calcium dodecyl benzene sulfonate, ethoxylated castor oil and EO/PO butanol emulsifiers, further comprising from 3 to 10% of a fungicidal active ingredient of the triazole chemical class solubilized in the oil phase.

In another preferred embodiment of the present invention, the agrochemical oil dispersion formulation comprises from 15 to 35% of two fungicidal active ingredients, one from the chemical class of strobilurins and the other being a triazole, suspended in modified soy oil, from 10 to 20% of phosphated ethoxylated tristyrylphenol and diethanolamine cocoamide dispersants, from 3 to 10% of attapulgite, from 0.5 to 2% of hydroxy ethylcellulose and from 5 to 15% of calcium dodecyl benzene sulfonate, ethoxylated castor oil and EO/PO butanol emulsifiers.

Examples of agrochemical formulations obtained by the process of the present invention are disclosed below. These examples are not intended to limit the present invention.

Example 1 - Agrochemical oil dispersion formulation comprising the insecticidal active ingredient imidacloprid suspended in soy methyl ester, dispersants, attapulgite, hydroxy ethylcellulose and emulsifiers, further comprising the insecticidal active ingredient bifenthrin solubilised in the oil phase.

| COMPONENTS | CONCENTRATION (%) |
|---|---|
| Imidaclopride | 270 |
| Phosphated ethoxylated tristyrylphenol | 53 |
| Diethanolamine cocoamide | 53 |
| Attapulgite | 67 |
| Hydroxy ethylcellulose | 6,5 |
| Calcium dodecyl benzene sulfonate | 17 |
| Ethoxylated castor oil | 88 |
| EO/PO butanol | 6 |
| Bifenthrin | 100 |
| Soy methyl ester | q.s.p. 1L |

The process for preparing the formulation of Example 1 was performed by dispersing the imidacloprid in soy methyl ester in the presence of phosphated ethoxylated tristyrylphenol, diethanolamine cocoamide and attapulgite followed by milling this mixture until the particles reach 1 to 5 µm in size. Finally, under stirring, bifenthrin, calcium dodecyl benzene sulfonate, ethoxylated castor oil, EO/PO butanol, hydroxy ethylcellulose and, once again, attapulgite were added.

Example 2 - Agrochemical oil dispersion formulation comprising the fungicidal active ingredient picoxystrobin suspended in soy methyl ester, dispersants, attapulgite, hydroxy ethylcellulose and emulsifiers, further comprising the fungicidal active ingredient propiconazole solubilized in the oil phase.

| COMPONENTS | CONCENTRATION (g/L) |
|---|---|
| Picoxystrobin | 120 |
| Phosphated ethoxylated tristyrylphenol | 70 |
| Diethanolamine cocoamide | 70 |
| Attapulgite | 85 |
| Hydroxy ethylcellulose | 8 |
| Calcium dodecyl benzene sulfonate | 17 |
| Ethoxylated castor oil | 110 |
| EO/PO butanol | 6 |
| Propiconazole | 50 |
| Soy methyl ester | q.s.p. 1L |

The process for preparing the formulation of Example 2 was performed by dispersing picoxystrobin in soy methyl ester, in the presence of phosphated ethoxylated tristyrylphenol, diethanolamine cocoamide and attapulgite, followed by milling this mixture until the particles reach 1 to 5 µm in size. Finally, under stirring, propiconazole, calcium dodecyl benzene sulfonate, ethoxylated castor oil, EO/PO butanol, hydroxy ethylcellulose and, once again, attapulgite, were added.

## Claims

1. An agrochemical oil dispersion formulation **characterized by** comprising: (a) at least one active ingredient suspended in an oil phase; (b) dispersants; (c) a clay-based rheological additive; (d) a cellulose derived rheological additive; and (e) emulsifiers, wherein it can further comprise at least one active ingredient solubilized in the oil phase.

2. The agrochemical oil dispersion formulation of claim 1, **characterized in that** the active ingredient is a herbicide, an insecticide, a fungicide or an acaricide.

3. The agrochemical oil dispersion formulation of claim 1, **characterized in that** the oil phase comprises modified vegetable oils.

4. The agrochemical oil dispersion formulation of claim 1, **characterized in that** the dispersants are anionic surfactants and ethanolamine fatty amides.

5. The agrochemical oil dispersion formulation of claim 1, **characterized in that** the clay-based rheological additive is attapulgite.

6. The agrochemical oil dispersion formulation of claim 1, **characterized in that** the cellulose derived- rheological additive is hydroxyalkylcellulose.

7. The agrochemical oil dispersion formulation of claim 1, **characterized in that** the emulsifiers are non-ionic and anionic surfactants.

8. The agrochemical oil dispersion formulation of any one of claims 1 to 7, **characterized by** comprising: from 5 to 50% SD at least one active ingredient suspended in an oil phase; from 5 to 30%> of dispersants; from 1 to 20% of a clay-based rheological additive; from 0.1 to 5% of a cellulose derived- rheological additive; and from 3 to 25% of emulsifiers, wherein it can further comprise from 0 to 50% of at least one active ingredient solubilized in the oil phase.

9. The agrochemical oil dispersion formulation of claim 8, **characterized by** comprising: from 8 to 35% of at least one active ingredient suspended in an oil phase; from 8 to 20% of dispersants; from 3 to 10% of a clay-based rheological additive; from 0.3 to 2% of a cellulose derived- rheological additive; and from 5 to 15% of emulsifiers, wherein it can further comprise from 0 to 15% of at least one active ingredient solubilized in the oil phase.

10. Use of the agrochemical oil dispersion formulations of any one of claims 1 to 9, **characterized in that** it is in spray mixtures for pest control in agriculture.

11. A process for the preparation of an agrochemical oil dispersion formulation, **characterized by** comprising:
(1) a step of dispersing at least one active ingredient in the oil phase with dispersants and a clay-based rheological additive, followed by (2) a step of milling the dispersed mixture of step (1); followed by (3) a final mixing step where cellulose- and clay-based rheological additives are added in addition to emulsifiers, wherein at least one active ingredient can also be added by solubilization.

12. The process for preparation of the agrochemical oil dispersion formulation of claim 11, **characterized in that** the resulting formulation comprises: from 5 to 50% of at least one active ingredient suspended in an oil phase; from 5 to 30% of dispersants; from 1 to 20% of a clay-based rheological additive; from 0.1 to 5% of a cellulose derived- rheological additive; and from 3 to 25% of emulsifiers, wherein it can further comprise from 0 to 50% of at least one active ingredient solubilized in the oil phase.
